# EUROPEAN PATENT SPECIFICATION

(11) **EP 4 234 648 B1**
(45) Date of publication and mention of the grant of the patent: **07.10.2026**
(21) Application number: 22159286.8
(22) Date of filing: 28.02.2022
(51) Int. Cl.: C09D 11/322, C09D 11/36, C09D 11/104

(54) **OPAQUE PIGMENTED INK COMPOSITION FOR THE INKJET PRINTING TECHNIQUE**
OPAKE PIGMENTIERTE TINTENZUSAMMENSETZUNG FÜR TINTENSTRAHLDRUCKTECHNIK
COMPOSITION D'ENCRE PIGMENTÉE OPAQUE POUR LA TECHNIQUE D'IMPRESSION À JET D'ENCRE

(43) Date of publication of application: 30.08.2023
(73) Proprietor: Dover Europe Sàrl, 1214 Vernier (CH)
(72) Inventor: HERAULT, Nelly, 86160 LA FERRIERE-AIROUX (FR); NEAGU, Claudiu, 1700 FRIBOURG (CH)
(74) Representative: Regimbeau

(56) References cited:
- EP-A1- 3 067 397
- US-A1- 2004 110 868
- US-A1- 2004 154 495
- US-A1- 2014 378 585

## Description

### TECHNICAL FIELD

The invention relates to a pigmented ink composition for the inkjet printing technique used to print codes, messages, images, markings, having high contrast, high legibility, high visibility on all kinds of coloured surfaces, whatever the colour thereof.

For the purpose of the present description, the ink jet printing technique is meant to include the continuous inkjet printing techniques, which comprises the deflected, deviated, continuous ink jet ("ClJ") printing technique and the binary deviated continuous ink jet printing technique with uncharged drops also called super piezo inkjet ("SPI") printing technique.

The ink composition according to the invention is an opaque ink composition as defined below.

The ink composition according to the invention is a pigmented ink composition, i.e. a composition wherein the coloring materials included in the ink composition comprise one or more pigment(s)

The pigmented ink composition according to the invention may comprise a combination of pigments and dyes.

More precisely, the opaque pigmented ink jet ink composition according to the invention allows to obtain printed images, markings combining a high contrast and a good print quality, and a good printability behaviour, especially for QR codes, barcodes and multiline texts.

Good print quality especially means that the printed dots are rightly positioned compared to the expected position of the message to be printed, such as a QR code or a multiline text.

Furthermore, the opaque pigmented ink jet ink composition according to the invention give markings with good resistance to friction, rubbing and to solvents, especially to ethanol.

These markings have also strong adhesion to the printed substrates, as they successfully undergo the peeling test with an adhesive tape.

The pigmented ink jet ink composition according to the invention may have a white colour, i.e. containing a white pigment or a combination of a white pigment and other pigments or dyes, giving a pale colour, gives raise to printed messages, images, or markings having high contrast, and high legibility, good visibility on black or dark surfaces.

In the same way, the pigmented ink jet ink composition according to the invention may have a light or grey colour. A light colour could be any colour such as blue, yellow, red or green, wherein the resulting ink will give printed messages, images, or markings having a high contrast, high legibility and good visibility on black or dark coloured surfaces.

The invention also relates to a method for marking a substrate by jetting or spraying the opaque pigmented ink jet ink composition according to the invention onto said substrate.

The ink composition according to the invention is notably suitable for marking substrates, supports, and objects containing organic polymers, in particular containing thermoplastic polymers (« plastic materials »), such as polyolefins like polyethylenes (PE) or polypropylenes (PP), or polyvinylchlorides (PVC) and blends of such polymers; or containing metals or metal alloys.

The ink composition according to the invention is particularly suitable for marking of extruded, moulded, blow-moulded, injection-moulded, and rotation-moulded parts made of organic polymers, in particular made of thermoplastic polymers, notably made of polyurethanes (PURs), polyvinylchlorides (PVCs), or of polyolefins, such as polyethylenes (PEs) or polypropylenes (PPs), and blends thereof; or made of rubber.

Such parts are, for example, laminates, coatings, liners, wires, cables, hoses, pipes, cable ducts, cable trays, and boxes, coatings and housings of all kinds such as electrical boxes and cable boxes.

The ink composition according to the invention is especially aimed at marking flexible batteries or electronic circuit boards.

The properties of the ink composition according to the invention are particularly suitable for ink jet marking or printing on the variety of supports, substrates and objects, and materials mentioned in the previous paragraphs.

### STATE OF THE PRIOR ART

Ink jet printing is a well-known technique which allows printing, marking or decorating of all kinds of objects, at high speed and without contact of these objects with the printing device, with messages which can be changed at will such as bar codes, sell-by dates etc., even on non-planar substrates.

For all continuous ink jet printing techniques and technologies, including the CIJ and SPI techniques, the viscosity of inks at the ink projection temperature is very low, typically from 1 to 10 cPs (mPa.s), or 15 cPs, or 20 cPs, and therefore all these printing techniques that make use of ink jetting can be described as low viscosity ink deposition technologies.

Ink jetting enables contactless marking at a high running rate on objects that are not necessarily planer with the possibility of changing the message at will.

Ink compositions that can be jetted, particularly in the inkjet printing technique have to satisfy a number of criteria inherent to this technique related to (among other factors) the viscosity, solubility in a solvent for cleaning, compatibility of ingredients, proper wetting of substrate to be marked, etc., and electric conductivity in the case of the continuous inkjet printing technique.

Furthermore, these inks preferably dry quickly, be capable of flowing or remaining motionless close to the nozzle without clogging it, with good stability of the jet orientation to enable easy cleaning of the printing head.

Colouring materials included in inkjet inks are called "dyes or pigments" depending on whether they are soluble or insoluble, respectively, in the solvent used.

Pigments are inherently insoluble and are therefore dispersed and may or may not be opaque. They impart its colour to the ink, its opaqueness, or particular optical properties such as fluorescence. In some cases, dyes also confer sufficient conductivity to the ink so that there is no need to add a conductivity salt. This is the case of dyes known under the name C.I. Solvent Black 27, 29, 35 and 45.

Ink jet ink composition should give printed messages, markings, having good contrast, good legibility, and good visibility on the surfaces to be printed. Contrast, legibility, visibility are dependent on the colour and on the opaqueness of the ink composition, and on the colour of the surface to be printed.

Thus, the colouring material included in the ink composition is specifically selected depending on the specific colour and lightness of the surface to be printed, marked, so as to impart to the ink composition, and hence to the printed message, marking, a colour, a lightness, and an opaqueness providing good contrast with the colour of the surface to be printed, marked, and therefore good legibility.

Desirably, pigmented inks, as defined hereinabove should generally give printed images, markings having high contrast and should therefore incorporate high amounts of pigment. For example, white pigmented inks should incorporate high amounts of white pigments, such as TiO₂, to obtain high contrast on black or dark surfaces.

However, when high amounts of pigments are used, thus providing high contrast, then the print quality deteriorates.

In the inkjet (CIJ or SPI) printing technique the print quality is mainly determined by the breaking of the inkjet which should be stable.

Conversely, commercial CIJ ink compositions giving stable breaking of inkjet already exist. However, these ink compositions do not contain enough pigment and thus provide poor contrast.

If the amount of pigment such as TiO₂ were increased to give the desired contrast, the amount of binder resin of the ink composition would also have to be increased (because the pigment, such as TiO₂, is coated by the binder resin, i.e. is embedded in a matrix of the binder resin) and the viscosity of the ink composition would be much too high for correctly printing with the inkjet printing technique. The optimal viscosity range for printing with the CUJ printing technique is from 3 to 6 cPs at 20°C.

In the light of the above, there is a need for a pigmented ink jet ink composition for the ink jet printing technique especially for the CIJ printing technique or the SPI printing technique allowing to obtain printed images, markings, combining high contrast and good print quality (good printability behaviour). As a prior art, EP3067397 might be cited.

Good print quality especially means that the printed dots are well-aligned when compared to the original message, such as a QR code or a multiline text.

High printing quality also means that the markings obtained with such an ink jet ink composition should not spread or spread out, especially on polymer substrates, such as PP, PE, and PVC substrates.

The pigmented ink jet composition should provide stable phases of detections while running on printers, stable jet deviation, inducing precise drop positioning on substrates as well as enhanced message readability quality.

Furthermore, there is also a need for an opaque pigmented ink jet ink composition giving markings with good resistance to friction, rubbing and to solvents, especially to ethanol.

This ink composition being an ink for the CIJ printing technique or the SPI printing technique therefore, further, preferably should have all the properties required making this ink suitable for a correct use in printers using the CIJ printing technique or the SPI printing technique. These properties are for example viscosity, resistivity, etc. Especially, the ink composition should have a viscosity preferably within the preferred, optimal range as defined above (3 to 6 cPs at 20°C for the CIJ printing technique).

The ink preferably should have at the same time the property of drying quickly, to not obstruct the nozzles and to enable a rapid start up even after a long stoppage.

The markings should also have also strong adhesion to the printed substrate, i.e. they should successfully undergo the peeling test with an adhesive tape.

The ink composition, in addition, should preferably enable marking at high speed of objects of all kinds, even slightly porous, while always giving printing or marking of excellent quality, definition, and regularities.

The goal of the invention is to provide an opaque pigmented ink composition for the CIJ printing technique or the SPI printing technique, in other words an opaque pigmented CIJ or SPI ink composition, which meets among other things the needs and requirements listed above.

The goal of the invention is also to provide an opaque pigmented ink composition for the CIJ printing technique or the SPI printing technique that does not have the drawbacks, defects, limitations and disadvantages of the ink compositions of the prior art and which provides a solution to the problems of the ink compositions of the prior art. Especially, the goal of the invention is to provide an opaque pigmented ink composition for CIJ printing technique or the SPI printing technique, achieving better machinability, better contrast and ethanol resistance.

### SUMMARY OF THE INVENTION

This goal and still other ones are achieved, according to the invention, by an opaque pigmented ink composition for the inkjet printing technique, liquid at room temperature, comprising:
a) a solvent consisting of one or more aliphatic ketones with 3 to 10 carbon atoms, such as acetone, butanone (methyl-ethyl-ketone or MEK), pentanone-2 (methyl-propyl-ketone or MPK), methyl-3 butanone-2 (methyl-isopropyl-ketone or MiPK), diethyl ketone, methyl-4 pentanone-2 (methyl-isobutyl-ketone or MiBK), cyclopentanone, and cyclohexanone;
b) a binding resin having a weight average molecular weight of 16000 to 30000;
c) a tackifier selected from rosin esters having a weight average molecular weight of less than or equal to 2500, preferably from 1800 to 2200; and
d) one or more pigment(s) in a total amount from 5% to 20% by weight, preferably from 6.5% to 17% by weight, more preferably from 9% to 16% by weight, better from 10% to 15% by weight of the total weight of the ink jet ink composition;
the viscosity of the opaque pigmented ink composition being from 2.8 to 6.2 cPs, preferably from 3 to 5 cPs at 20°C, when the ink composition is for the CIJ printing technique, and from 1 to 25 cPs, preferably from 6 to 25 cPs at 20°C when the ink composition is for the SPI printing technique, characterized in that it comprises a polycaprolactone diol having a weight average molecular weight from 3000 to 15000.

Herein, aliphatic ketone is intended to mean acyclic (straight or branched) ketones and cyclic ketones.

More preferably, the solvent consists of Methyl-Ethyl-Ketone or MEK.

By « room temperature » is generally meant a temperature from 5°C to 30°C, preferably from 10°C to 25°C, still preferably from 15°C to 24°C, better from 20°C to 23°C. It is quite understood that the ink is liquid at atmospheric pressure.

The term "pigment" refers to a colorant that is generally insoluble in water and in organic solvents, especially in the solvent of the ink composition according to the invention, and is solid at ambient temperatures.

The ink composition according to the invention is an opaque ink jet ink composition.

By opaque ink composition is generally meant an ink composition giving on a substrate, support, or background, markings, printed messages, through which the colour of the substrate, support, or background, cannot be seen any more.

This is especially true when the particle size of the pigments of the ink composition is sufficiently large compared to the wavelength of visible light, and when the refraction index of said pigments is sufficiently different from the refraction index of the medium where they are dispersed.

The ink composition according to the invention has never been described, nor suggested in the prior art.

According to a first feature of the ink composition according to the invention, the ink composition according to the invention comprises a specific solvent consisting of one or more aliphatic ketones with 3 to 10 carbon atoms.

Surprisingly, it has been shown that with other solvents (i.e. solvents not consisting of ketones) for example mixtures of a ketone such as MEK with another solvent, breaking of the inkjet is not stable and therefore print quality is poor.

Moreover, it has been demonstrated that the effects of the present invention and especially a stable breaking of the inkjet are even better achieved when the solvent consists of Methyl-Ethyl-Ketone or MEK, i.e. the solvent being a mono solvent consisting of MEK.

According to a second feature of the ink composition according to the invention, the ink composition according to the invention comprises a binding resin having a weight average molecular weight from 16000 to 30000.

The binding resin is primarily selected depending on its rheological properties so as to have a low viscosity in the solvent of the ink composition thus allowing to get high dry weight in the ink composition, bringing therefore the opportunity to increase the amount of pigment in the ink and consequently to bring the appropriate contrast.

The binding resin may for example have a viscosity of less than 4 mPa.s, preferably from 0.5 to 3.5 mPa.s (cPs) at 20°C in the solvent of the ink composition, such as MEK, at concentrations from 2 to 15 wt.%.

The binding resin has a specific weight average molecular weight, MW, because the MW and the chain length of the polymer resin strongly influences the elasticity thereof. The longer the polymer chain, the more elastic the polymer resin is.

In the ink composition according to the invention, a binding resin with a MW -and therefore a chain length- which are rather low (when compared to the polymer resins commonly used in inkjet inks such as CIJ inks) is used.

According to the invention, it has been determined that the binding resin should have a low viscosity and a low elasticity. However, this elasticity should not be too low. Thus the MW range is preferably from 16000 to 30000.

This is because the elasticity of the resin strongly influences the quality of the breaking of the inkjet. If the resin is too elastic, then breaking does not always occur at the same location in the inkjet, i.e. is not stable. If breaking of the inkjet is stable, then the droplets are well located and well defined, the print quality is high and the printer operating range is broad. Otherwise, the dots are not well aligned, the print quality is not good and the printer operating range is narrow.

In the specific MW range disclosed above, it has surprisingly been shown that the elasticity of the binding resin is optimal, i.e. not too low and not too high, the breaking of the ink jet is stable, and therefore the print quality is high and the printer operating range is broad.

However, importantly, according to the invention, a stable breaking of the inkjet and a good print quality is obtained when using the combination of the specific binding resin as described above and of the specific tackifier as disclosed below. According to a third feature of the ink composition according to the invention, the ink composition according to the invention comprises a specific tackifier, tackifying resin, selected from rosin esters having a weight average molecular weight of less than or equal to 2500, preferably from 1800 to 2200

In the same way as the binding resin, the specific tackifier included in the ink composition according to the invention should have a specific, low viscosity to increase the amount of pigment.

The tackifier may for example have a viscosity of less than 1 mPa.s, preferably from 0.4 to 0.9 mPa.s (cPs) at 20°C in the solvent of the ink composition, such as MEK, at concentrations from 1 to 20 wt.%.

Again, it is the combination, in the ink composition according to the invention of the specific binding resin and of the specific tackifier as disclosed above, that gives a stable breaking of the inkjet and accordingly a good print quality.

This has been demonstrated by the fact that if the specific binding resin disclosed above, is used with another tackifier instead of the specific rosin ester tackifying resin a stable breaking of the inkjet is not obtained and the print quality is poor.

Surprisingly, in the ink composition according to the invention wherein a specific binding resin is combined with a specific rosin ester tackifier, a very stable breaking of the inkjet is obtained.

Moreover, these specific tackifiers, selected from specific, rosin esters apart from giving good print quality also surprisingly impart resistance to ethanol.

Other tackifying resins could possibly give good print quality. However, unlike the specific tackifying resins used in the ink composition according to the invention, they give markings which are not ethanol resistant.

Preferably, the rosin esters are prepared by esterification of rosin with monovalent and polyvalent alcohols such as glycerine and pentaerythritol.

A preferred tackifier is a pentaerythritol rosin ester which gives even better performances as regards print quality and resistance to ethanol.

An example of a commercially available a pentaerythritol rosin ester is GRANOLITE^{®} P118 from DRT^{®}.

According to a fourth feature of the ink composition according to the invention, said ink composition comprises one or more pigment(s) in a total amount from 5% to 20 % , preferably from 6.5 % to 17% by weight, more preferably from 9% to 16% by weight, better from 10% to 15% by weight of the total weight of the inkjet ink composition This amount of pigment is greater than the amount currently used in pigmented, opaque ink compositions and provides therefore high contrast.

In other words, in the ink composition according to the invention, the amount of pigment is increased, and accordingly contrast is enhanced.

In the ink composition according to the invention because a binding resin and a tackifier with quite low viscosities are used, higher amounts of white pigment may be used, consequently bringing the appropriate contrast.

As already mentioned above, because of the specific components included in the ink composition of the invention, surprisingly, this ink composition having a viscosity within the range as claimed in claim 1 contains a high amount of pigment(s).

Thus, to summarize, the ink composition according to the invention comprises the combination of a specific binding resin providing low viscosity and of a specific tackifier in a specific solvent.

With this specific combination defining a triple selection, all the goals outlined hereinabove are achieved, namely good print quality, higher contrast, and resistance to ethanol.

Said goals are better achieved with an ink composition comprising a binding resin selected from polyester resins, preferably from copolyester resins.

Said goals are even better achieved with an ink composition comprising a copolyester resin prepared by polymerization of four specific monomers, i.e. terephthalic acid, isophthalic acid, neopentyl glycol and ethylene glycol; a pentaerythritol rosin ester; and MEK.

Contrast, legibility, and visibility, of printed messages, markings obtained with the ink jet ink compositions according to the invention have been assessed with the naked eyes by several observers, i.e. a panel of observers, and have proved to be good (see examples).

Contrast, legibility, and visibility, of printed messages, markings obtained with the ink jet ink compositions according to the invention have also been assessed by measuring L*n and L*b of ink jet compositions according to the invention handcoated on contrast cards and allowed to dry in air at room temperature (see examples below), and also by calculating the contrast ratio Rc = L*n/L*b.

A detailed explanation of how L*n and L*b, and the contrast ratio Rc = L*n/L*b are defined, measured and calculated is provided herein below in the "examples" section of the description.

For example, L*n of a white ink composition according to the invention is from 55 to 65.

For example, L*b of a white ink composition according to the invention is from 93 to 99.

For example, the contrast ratio L*n/L*b of a white ink composition according to the invention is from 0.55 to 0.70.

The opaque pigmented ink composition according to the invention *inter alia* meets the needs, criteria and requirements mentioned above and provides a solution to the problems of the opaque pigmented CIJ ink compositions of the prior art and does have the drawbacks, limitations, defects and disadvantages of the opaque pigmented CIJ ink compositions of the prior art.

In particular, in addition to providing markings which are legible, visible, and have good contrast on all coloured surfaces the ink jet compositions according to the invention provide markings that resist to friction, rubbing, for example with a finger and with a gum, and are not damaged or erased (see examples).

The printing quality is high and the markings visually appear as distinct, well separated, round dots (or droplets), which do not merge with each other and the printed message is clear and easily legible.

In other words, the marking dots exhibit a high definition and do not smear or smudge (see examples).

The markings obtained with the opaque pigmented inkjet ink compositions according to the invention are also highly resistant to water, organic solvents, alcohols, oils, and greasy substances, for example to water, ethanol, isopropanol, and gasoline. Said markings are also resistant to rubbing with said substances.

The opaque ink jet ink compositions according to the invention have a high lightfastness.

The ink compositions according to the invention are also stable upon storage, even during long period of time, generally of at least 9 months, between 0°C and 50°C.

Preferably the binding resin is an amorphous copolyester resin which is therefore soluble in the solvent of the ink composition according to the invention, contrary to crystalline polymers which are insoluble in organic solvents.

This copolyester resin may be a highly specific resin prepared by polymerization of four specific monomers, i.e. terephthalic acid, isophthalic acid, neopentyl glycol and ethylene glycol.

This copolyester resin is specific in that it is prepared from 4 specific monomers, i.e. two specific diacids and two specific diols, all these monomers being present in the polymerization mixture and then forming the polyester resin.

A copolyester resin which may be included into the composition according to the invention is for example the resin available under the name of Vylon GK 250^{®} from Toyobo Vylon. This polyester is actually a copolymer of at least both aforementioned diacids, i.e. terephthalic acid and isophthalic acid with at least both aforementioned diols, i.e. neopentyl glycol and ethylene glycol.

All the goals outlined hereinabove, namely good print quality, higher contrast, and resistance to ethanol, are even better achieved with an ink composition comprising a copolyester resin prepared by polymerization of four specific monomers, i.e. terephthalic acid, isophthalic acid, neopentyl glycol and ethylene glycol; a pentaerythritol rosin ester; and MEK.

In the ink composition according to the invention, the solvent generally represents 20% to 99% by weight of the total weight of the ink composition, preferably the solvent represents from 30% to 95% by weight, more preferably 40% to 90% by weight, even more preferably from 50% to 75% by weight, for example of the total weight of the ink composition according to the invention.

Advantageously, the ink composition according to the invention may comprise from 0.1% to 30% by weight, preferably from 5% to 20% by weight, more preferably from 7 to 15% by weight, better from 7.5 to 10% of the total weight of the ink composition, of the binding resin.

Advantageously, the ink composition according to the invention may comprise from 0.1% to 30% by weight, preferably from 5% to 20% by weight, more preferably from 7 to 15% by weight, better from 7,5 to 10% of the total weight of the ink composition, of the tackifier.

Preferably the binding resin and the tackifier are present in the same amount (%w) in the ink composition.

Inside the limited domain defined by these ranges of weight percentages of the binding resin and tackifier, the properties of the markings obtained with the ink compositions according to the invention are optimal, and their resistance notably to ethanol are optimal.

The ink composition according to the invention may comprise a binding resin and a tackifier as claimed in claim 1, in addition to one or several other optional polymer(s) and/or resin(s). Alternatively, the ink composition according to the invention may consist of only one binding resin and one tackifier.

Advantageously, this or these other polymer(s) and/or resin(s) may notably be selected from (meth)acrylic, vinylic, ketonic, hydroxyaromatic, cellulosic, styrenic, epoxy, polyurethanes, styrene-acrylates, alkoxysilanes, and combinations of two or more of the latter.

The pigment(s) may be selected from all known pigments such as C.I. (Colour Index) Pigments.

The pigment(s) may have any colour.

The pigment(s) are chosen depending on the colour of the substrate, support to be printed.

The pigments(s) may be selected from black pigments, from white pigments, and from pigments having a colour other than white and other than black.

The black pigment(s) may be selected from all known black pigments, such as carbon blacks.

The black pigment(s) may preferably be selected among C.I. (Colour Index) Pigment Blacks, such as C.I. Pigment Black 6 (carbon black) and C.I. Pigment Black 7 (carbon black).

The white pigment(s) may be selected from all known white pigments such as titanium dioxides (TiO₂) especially in rutile form.

The white pigment(s) may preferably be selected among C.I. (Colour Index) Pigment Whites, such as C.I. Pigment White 5 (Lithopone, mixture of barium sulphate and zinc sulphide), 6 (TiO₂), 12 (ZrO₂), and 21 (BaSO₄).

C.I. Pigment White 6 (TiO₂) is particularly preferred.

The pigment(s) having a colour other than white and other than black may have any colour such as red, orange, yellow, green, blue, violet, or purple.

Said pigment(s) having a colour other than white and other than black are also chosen depending on the colour of the substrate, support to be printed.

The one or more pigment(s) having a colour other than white and other than black may be selected from among Colour Index (C.I.) pigments.

The Colour Index (C.I.) pigments having a colour other than white and other than black may preferably be selected from among yellow, orange, red, violet, purple, blue, green and brown C.I. pigments.

As an example, C.I. Pigment Yellow 83 improves ink readability on blue substrates.

In the end resulting colour can be obtained by pigment(s), coloured dye(s) or combinations of those. The ink composition according to the invention is preferably a nonaqueous composition, which generally means that the ink composition according to the invention contains substantially no water or a very low proportion of water.

Thus, the ink composition according to the invention usually comprises less than 0.5% by weight of water, preferably less than 0.1% by weight of water and even more preferably less than 0.05% by weight of water in proportion to the total weight of the ink; even better, the solvent, and the ink composition may be considered to substantially contain no water (0% by weight of water).

Since the added water is an impurity in the various components of the ink, the water content will be low when the degree of purity of the components is high. In fact, it could be said that the ink according to the invention does not contain any added water but only water included as an impurity in the different constituents of the ink.

The ink composition comprises one or several plasticizers (of the binding resin(s)) and selected according to the binding resin(s).

Mention may be made, as a plasticizer, for example, of thermoplastic polyurethanes, phthalates, adipates, esters such as citrates like trialkyl citrates, for example tributyl citrate, alkyl phosphates, glycerol, lactic acid, oleic acid, polypropylene glycol, triglycerides of fatty acids, levulinic acid; carbamates or carbamic resins; polycaprolactone diols and mixtures thereof.

By "thermoplastic polyurethanes" are meant polyurethanes from the polycondensation of polyalcohols and of polyisocyanates.

The plasticizer is a component of the ink composition.

The plasticizer can be used to adjust the softness Tg of the binding resin /tackifier mixture.

The plasticizer may for example have a viscosity of less than 1 mPa.s, preferably from 0.4 to 0.6 mPa.s (cPs) at 20°C in the solvent of the ink composition, such as MEK, at concentrations from 1 to 5 wt.%.

The plasticizer can also be added for other purposes than the binding resin and the tackifier, namely to impart some mechanical properties to the marking such as crack resistance and flexibility of the printed ink.

The plasticizers are polycaprolactone diols which seems to give the best results as regards the mechanical properties of the marking.

The plasticizer has a weight molecular weight from 3000 to 15000.

Within this weight molecular weight range optimal properties are obtained, namely optimal crack resistance and optimal flexibility of the printed ink.

The plasticizers are polycaprolactone diols having a Mw (weight average molecular weight) from 3000 to 15000.

The plasticizer(s) is (are) generally present in an amount of at least 0.05%, preferably 0.05% to 20% by weight, more preferably 0.05% to 5% by weight of the total weight of the ink composition. If the amount of plasticizer is too high, then the ethanol resistance property is deteriorated. Thus, the range 0.05% to 5% by weight is optimal regarding these properties.

The composition according to the invention, if it is required to be jettable, sprayable, using the CIJ printing technique, may also optionally comprise at least one conductivity salt, unless another ingredient of the ink such as a dye, pigment or other is itself an ionisable compound such as a salt that can confer conductivity when it is dissociated, and gives sufficient conductivity to the ink so that there is no need to add another conductivity salt strictly speaking.

If the ink according to the invention has to be applicable by the continuous deflected ink jet printing technique, it must have therefore sufficient electrical conductivity, generally greater than or equal to 5 µS/cm at 20°C, preferably greater than or equal to 300 µS/cm at 20°C, even more preferably greater than or equal to 500 µS/cm at 20°C.

The conductivity of the ink composition according to the invention using the deflected continuous jet printing technique (CIJ) could for example be greater than or equal to 300 µS/cm at 20°C, particularly from 500 to 2000 µS/cm at 20°C.

If the ink according to the invention has to be applicable by the SPI printing technique, the electrical conductivity thereof is generally from 5 to 500 µS/cm at 20°C, preferably from 5 to 400 µS/cm, more preferably from 30 to 400 µS/cm, for example from 30 to 200 µS/cm at 20°C.

Let us specify that the electric conductivity is measured with a commercial instrument and according to the principle well-known to the man skilled in the art, for example described on the site: https://fr.wikipedia.org/wiki/Conductimétrie.

The electrical conductivity may be measured according to the following standard:
ASTM D1125 - 14: Standard Test Methods for Electrical Conductivity and Resistivity of Water.

The electrical conductivity may be measured for example with a commercially available conductimeter of the Radiometer^{®} Company.

However, it will sometimes be necessary to include at least one conductivity salt strictly speaking into the ink composition, different from ionisable compounds, such as the dyes, pigments and other ingredients mentioned above.

A "conductivity salt" generally means a salt that confers electrical conductivity to the ink composition.

This conductivity salt may thus be chosen from among alkaline metals salts such as lithium, sodium, potassium salts, alkaline earth metal salts such as magnesium and calcium salts, and single or quaternary ammonium salts such as tetrabutyl ammonium salts; these salts being in the form of halides (chlorides, bromides, iodides, fluorides), perchlorates, nitrates, thiocyanates, formiates, acetates, sulphates, propionates, trifluoroacetates, triflates (trifluoromethane sulphonates), hexafluorophosphates, hexafluoroantimonates, tetrafluoroborates, picrates, carboxylates or sulphonates, etc.

Since, generally, the markings obtained with the ink composition usually have to be resistant to water, this or these conductivity salts will preferably be chosen from among those that are insoluble in water (in other words, in general, for which the solubility in water is less than 0.5% by weight), such as fatty chain quaternary ammonium and hexafluorophosphates or hexafluoroantimonates.

Therefore, this at least one conductivity salt will be present, if necessary, in the ink composition so as to confer the above conductivity to the ink: preferably, its (their) amount will be from 0.1 to 20% by weight, more preferably from 0.1 to 10% by weight and even better from 0.1 to 5% by weight, of the total weight of the ink composition.

The composition according to the invention may also comprise one or several additives, for example chosen from among the compounds that improve the solubility of some of its components, the print quality, the adherence, or the control of wetting of the ink on different supports.

The additive(s) may be chosen for example from among anti-foaming agents; chemical stabilisers; UV stabilisers; surface active agents such as Fluorad^{®} FC430 or BYK^{®} UV-3500 or polyether modified polysiloxanes such as BYk^{®}3760; agents inhibiting corrosion by salts, particularly by conductivity salts; bactericides, fungicides and biocides; pH regulatory buffers; and optical brighteners etc.

The additive(s) is (are) used at very low doses, usually less than or equal to 5% and sometimes as low as 0.01%, depending on whether they are anti-foaming agents, stabilisers or surface-active agents.

The viscosity of the ink jet ink composition according to the invention is as defined above.

The viscosity may be measured according to the following standard:
DIN 53019 -1: Measurements of viscosities and flow curves by means of rotational viscometers.

The dynamic viscosities may be measured for example by means of a viscometer with coaxial cylinders, such as the viscometer with coaxial cylinders of the *"Couette"* type of the Contraves^{®} Company.

Another object of the invention is a method for marking a substrate, by jetting or spraying an ink composition onto this substrate, using an inkjet printing technique, whereby the substrate is provided with a marking obtained by drying and/or absorption of the ink composition, the jetted or sprayed ink composition being an opaque pigmented ink composition according to the invention as described above.

The inkjet printing technique includes the CIJ printing technique and the SPI printing technique.

The substrate provided with a marking obtained by drying and/or absorption (in the substrate) of the ink composition as described above may be a porous or non-porous substrate.

Said marking comprises essentially the dye or pigment of the ink and the binder and is obtained by evaporation and/or absorption of the solvent.

The substrate is whatever substrate on which one can print using the inkjet printing technique such as the CIJ printing technique.

The substrate may be in particular a flexible substrate.

This substrate may be made of metal, for example of iron, aluminium; of an alloy, such as steel, especially stainless steel; of an organic polymer, particularly a thermoplastic polymer (plastic), particularly in the form of a film, for example chosen from among polyurethanes (PURs), PVDCs, PVCs, polyesters, PETs, polyolefins, such as polyethylenes (PE) or polypropylenes (PP), and blends thereof; or of a composite of several of the above materials.

The substrate may be an extruded, moulded, blow-moulded, injection-moulded, or rotation-moulded part made of one or more organic polymer(s), in particular made of one or more thermoplastic polymer(s), preferably selected from polyurethanes (PURs), polyvinylchlorides (PVCs), and polyolefins, such as polyethylenes (PEs) or polypropylenes (PPs), and blends thereof

Said part may, for example, be selected from wires, cables, hoses, pipes, cable ducts, cable trays, and boxes, coatings and housings of all kinds such as electrical boxes and cable boxes, flexible batteries and electronic circuit boards. The substrate may have any shape.

An excellent quality of markings, printings can be obtained on all substrates, particularly on laminates, coatings, liners, wires, cables, hoses, pipes, cable ducts, cable trays, and boxes, coatings and housings of all kinds such as electrical boxes and cable boxes.

The ink composition according to the invention is especially suitable for marking flexible batteries and electronic circuit boards.

The invention will be better understood upon reading the following description of particular embodiments of the invention, given as illustrative and non-limiting examples, in relation with the appended drawings.

### BRIEF DESCRIPTION OF THE DRAWINGS.

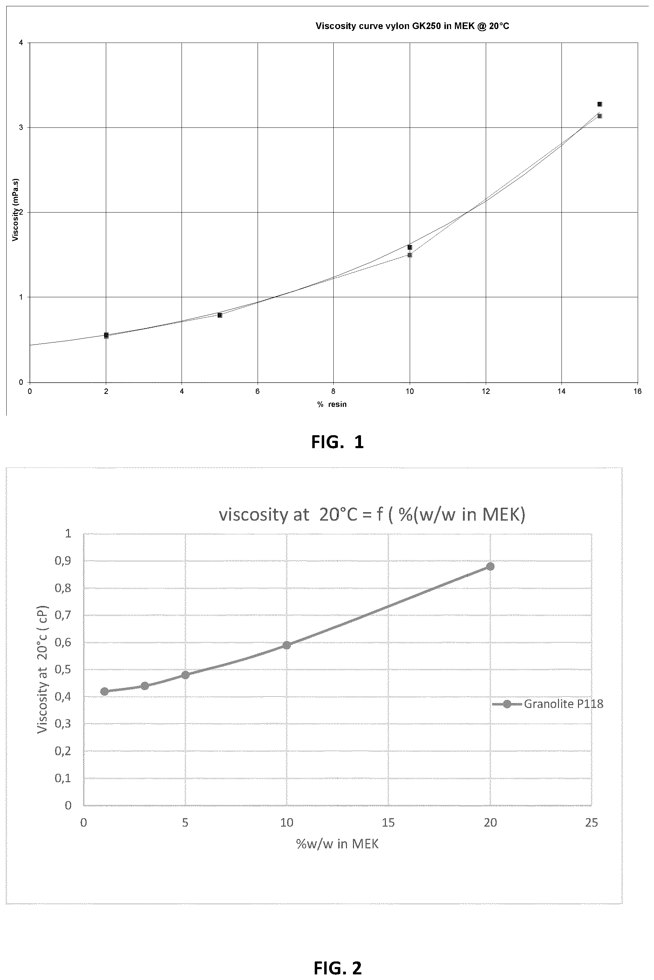

- Figure 1 is a graph showing the viscosity (mPa.s) vs wt.% resin of the binding resin Vylon^{®} GK 250 in MEK at 20°C.
- Figure 2 is a graph showing the viscosity (mPa.s) vs wt.% of tackifier Granolite^{®} P118in MEK at 20°C.

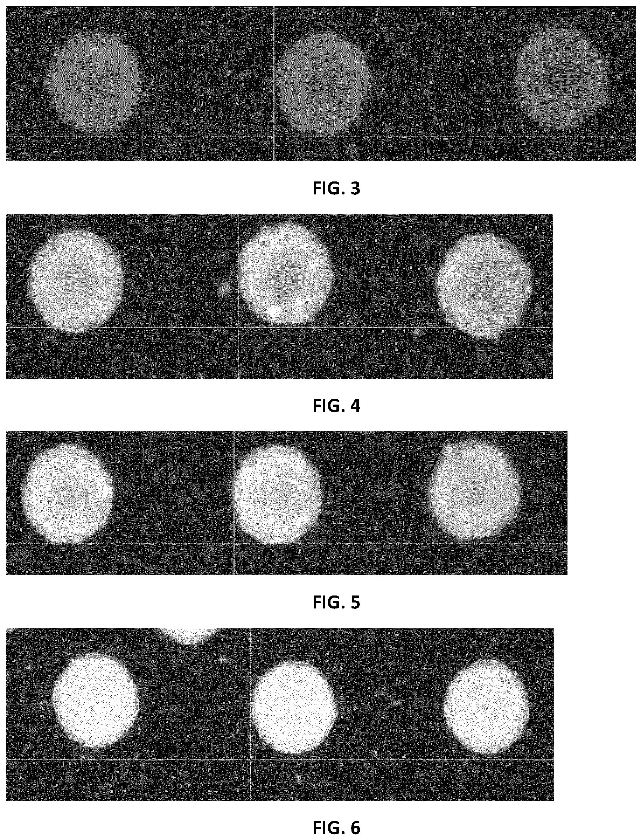

- Figure 3 is a photograph of printed dots obtained by jetting a comparative commercial ink composition on a black substrate, namely a black Leneta^{®} Card, using a Markem-Imaje^{®} printer 9450 (which uses the continuous deflected ink jet printing technique). Nozzle diameter is 48 µm and dot, drop diameter is 289 µm.
- Figure 4 is a photograph of printed dots obtained by jetting an ink composition according to the invention (Example 1) on a black substrate, namely a black Leneta^{®} Card, using a Markem-Imaje^{®} printer 9450 (which uses the continuous deflected ink jet printing technique). Nozzle diameter is 48 µm and dot, drop diameter is 275 µm.
- Figure 5 is a photograph of printed dots obtained by jetting an ink composition according to the invention (Example 1) on a black substrate, namely a black Leneta^{®} Card, using a Markem-Imaje^{®} printer 9450 (which uses the continuous deflected ink jet printing technique). Nozzle diameter is 48 µm and dot, drop diameter is 257 µm.
- Figure 6 is a photograph of printed dots obtained by jetting an ink composition according to the invention (Example 1) on a black substrate, namely a black Leneta^{®} Card, using a Markem-Imaje^{®} printer 9450 (which uses the continuous deflected ink jet printing technique). Nozzle diameter is 48 µm and dot, drop diameter is 257 µm.

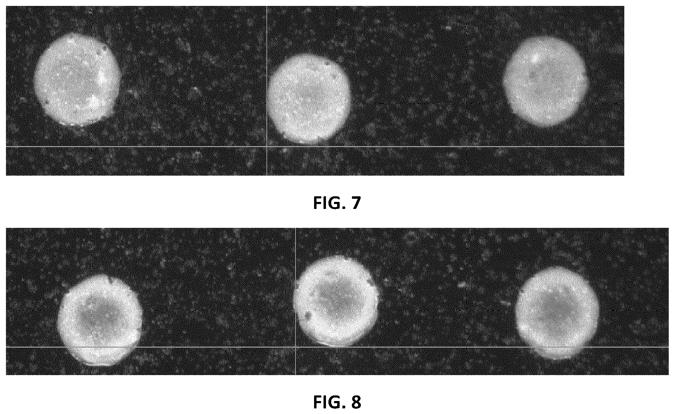

- Figure 7 is a photograph of printed dots obtained by jetting a comparative commercial ink composition on a black substrate, namely a black Leneta^{®} Card, using a Markem-Imaje^{®} printer 9450 (which uses the continuous deflected ink jet printing technique). Nozzle diameter is 48 µm and dot, drop diameter is 245µm.
- Figure 8 is a photograph of printed dots obtained by jetting a comparative commercial ink composition on a black substrate, namely a black Leneta^{®} Card, using a Markem-Imaje^{®} printer 9450 (which uses the continuous deflected ink jet printing technique). Nozzle diameter is 48 µm and dot, drop diameter is 242 µm.

### DETAILED DESCRIPTION OF PARTICULAR EMBODIMENTS.

### EXAMPLES:

In reference examples 1 to 2, opaque, white, inkjet ink compositions according to parts of the invention are prepared.

These ink compositions comprise, the ingredients, constituents, mentioned in Table I below, in the proportions mentioned in Table I below.

These compositions are generally prepared by simply mixing the ingredients.

The binder percentages are given as wt. % solid.

The Viscosity at 20°C (mPa.s/cPs), the conductivity at 20°C (µS/cm), and the contrast ratio Rc = L*n/L*b have been specified in Table I.

**TABLE I**

| Constituents (wt. %) | Example 1 | Example 2 | Example 3 |
|---|---|---|---|
| VYLON^{®} GK 250 : Binder | 8 | 9.23 | 8 |
| GRANOLITE^{®} P 118 : Tackifier | 8.65 | 9.23 | 8 |
| BYK^{®} 3760 : surfactant, levelling agent | 0.13 | 0.14 | 0.1 |
| TINOPAL^{®} OB CO: Optical brightener | 0.2 | 0.23 | - |
| Tetrabutylammonium hexafluorophosphate: conductive agent | 1.5 | 1.4 | 1.5 |
| TiO₂ dispersion | 19.8 | 22.85 | 19.8 |
| TiO₂ dry pigment | 12.9 | 14.9 | 12.9 |
| MEK (solvent) | 62.37 | 56.93 | - |
| Solvent blend based on MEK | | | 61.4 |
| Viscosity (mPa.s) | 3.3 | 4.5 | 4.4 |
| Conductivity (µS/cm) | 1354 | 1505 | 780 |
| L*n | 57 | 61 | 57 |
| L*b | 98.3 | 98.4 | 98 |
| Rc | 0.58 | 0.62 | 0.58 |

VYLON^{®} GK 250 is an amorphous copolyester resin from TOYOBO^{®}, more exactly a copolyester resin prepared by polymerization of terephthalic acid, isophthalic acid, neopentylglycol and ethyleneglycol.

GRANOLITE^{®} P118 is a pentaerythritol rosin ester from DRT^{®}.

BYK^{®} 3760 is a silicone-containing surface additive from BYK^{®}, namely a Polyether-modified polydimethylsiloxane.

TINOPAL^{®} OB CO Tinopal^{®} OB CO is a fluorescent optical brightener from BASF Dispersions & Resins, namely Thiophenediylbis(5-tert-butyl-1,3-benzoxazole).

The white pigment, TiO2, dispersion is a dispersion in MEK, containing 65 wt.% Pigment White 6 (TiO₂, Rutile form), and a polyalkylene imine dispersant available from the Kronos^{®} Company under the denomination *"Kronos^{®} 2064".*

Thus, an ink containing e.g. 20 wt. % of this dispersion actually contains 13 wt.% TiO₂.

Let us specify that the weight percentages of the pigment dispersions specified in the above Table I, are expressed as a weight percentage of the liquid dispersions on the total weight of the ink composition.

The dynamic viscosities were measured at 20°C by means of a viscometer with coaxial cylinders, namely the "low shear 30" from Contraves^{®} Company at a shear rate of 60 s⁻¹.

The electric conductivities were measured at 20°C with a commercially available conductimeter of the Radiometer^{®} Company.

Ln and contrast ratio Rc of the ink compositions according to parts of the invention Reference examples 1 and 2) were assessed as disclosed herein below.

The ink composition recited in Table I above were coated on opacity charts and allowed to dry in air at room temperature.

Said opacity charts were opacity charts Leneta Form 2A from Labomat^{®}.

Leneta Form 2A are black and white sealed opacity charts. The top is black and the bottom is white with overall dimensions of 5.5 x 10 inches (140 x 254 mm).

The handcoater is a K Control Coater from R Printcoat Instruments.

The coating conditions were as follows:
- No.2 Bar.
- Speed 8.

The coated thickness is very precisely defined by the specific bar used for coating, namely the N°2 bar.

L*, a*, and b* of the dried coated ink compositions were measured in CIELAB coordinates, CIELAB color space (also known as CIE L*a*b*) by means of an eXact^{®} spectrophotometer of the X-rite Pantone^{®} company using the following measurement conditions:
- Illuminent D65;
- Viewing angle: 10°;
- Polarizing filter: M3;
- Measurements, for each ink:
   - Three L*, a*, and b* measurements on the white area of the opacity chart (left-middle-right) these are the L*_{b}, a*_{b}, and b*_{b} measurements.
      L* is the lightness from black (0) to white (100).
   - Three L*, a*, and b* measurements on the black area of the opacity chart (left-middle-right) these are the L*ₙ, a*ₙ, and b*ₙ measurements.

The same measurements were performed on two opacity cards.

Thus, six measurements of L*_{b}, a*_{b}, and b*_{b} and L*ₙ, a*ₙ, and b*ₙ were performed for each ink.

L*b in Table I are the averaged values of the six L*, a*, and b* measurements on the white area of the opacity chart.

L*n in Table I are the averaged values of the three L*, a*, and b* measurements on the black area of the opacity chart.

The contrast ratios Rc in Table I are the ratio Ln (averaged value)/ Lb (averaged value).

The ink composition according to parts of the invention Reference example 1) and comparative ink compositions not according to the invention were jetted on a black substrate, namely a black Lenetta^{®} Card, using a Markem-Imaje^{®} printer 9450 (which uses the continuous deflected ink jet printing technique). The ink compositions were then allowed to dry at room temperature.

Please note that other printers such as any development of the Markem-Imaje^{®} printer 9450, for example Markem-Imaje^{®} printer 9750 can equally successfully be used. Figures 3 to 8 show photographs of the printed markings (dots) so obtained.

Figures 4 to 6, clearly show that all the markings printed using the ink compositions according to the invention (unlike the markings printed using the comparative ink compositions: see Figures 3, and 7 to 8) have a good contrast, a high printing quality, and are visible and legible.

More precisely, the printing quality is high and the markings visually appear as distinct, well separated, round dots (or droplets), which do not merge with each other and the printed message is clear, easily legible, visible and has a good contrast. In other words, the marking dots exhibit a high definition and do not smear or smudge.

Moreover, various tests were carried out, and clearly demonstrate that the ink compositions according to the invention of Example 1, when jetted using a Markem-Imaje^{®} printer 9450, which uses the CIJ printing technique, on an aliphatic polyurethane coated aluminium substrate provide markings that resist to friction, rubbing with a finger and with a gum, and are not damaged or erased.

Please note that other printers such as any development of the Markem-Imaje^{®} printer 9450, for example Markem-Imaje^{®} printer 9750 can equally successfully be used.

Tests have also shown that markings obtained with the ink compositions according to the invention (when jetted using a Markem-Imaje^{®} printer 9450, which uses the CIJ printing technique) do not transfer.

The markings obtained with the ink composition according to the invention also give good results when subjected to the *"Scotch Tape"* test.

Tests were also carried out clearly showing that the markings obtained with the opaque pigmented ink jet ink compositions according to the invention are also highly resistant to water, ethanol, isopropanol, and gasoline and to rubbing with said substances.

Other tests have been carried out and have actually demonstrated that the opaque pigmented inkjet ink compositions according to the invention have a high lightfastness.

Results of these tests are provided in Table II below. Example 1 is a Reference example.

**TABLE II**

| Marking performance, both at time t0*t0 and tt+24h** | Comparative ink 1 | Comparative ink 2 | Ink of Example 1 |
|---|---|---|---|
| Dry Content | 17.50% | 27.50% | 34% |
| %TiO₂ | 6.7% | 11% | 14% |
| Solvent | MEK | MEK | MEK |
| Contrast | 3 | 1 | 1 |
| Rub Resistance on an aliphatic polyurethane coated aluminium substrate | 1 | 1 | 1 |
| Water resistance *(spray and immersion)* | 1 | 1 | 1 |
| Water resistance, 10sec spraying / aliphatic polyurethane coated aluminium substrate | 1 | 1 | 1 |
| Water resistance, 10sec spraying + finger rubbing / aliphatic polyurethane coated aluminium substrate | 1 | 1 | 1 |
| Water resistance, 1 min immersion / aliphatic polyurethane coated aluminium substrate | 1 | 1 | 1 |
| Water resistance, 1 min immersion + rubbing / aliphatic polyurethane coated aluminium substrate | 1 | 1 | 1 |
| Ethanol resistance *(spray and immersion)* | 3 | 3 | 2 |
| Ethanol resistance, 10sec spraying / aliphatic polyurethane coated aluminium substrate | 1 | 1 | 1 |
| Ethanol resistance, 10sec spraying + finger rubbing / aliphatic polyurethane coated aluminium substrate | 3 | 3 | 2 |
| Ethanol resistance, 1 min immersion / aliphatic polyurethane coated aluminium substrate | 1 | 1 | 1 |
| Ethanol resistance, 1 min immersion + rubbing / aliphatic polyurethane coated aluminium substrate | 3 | 3 | 3 |
| Tape test (5x, 3 different tapes) on aliphatic polyurethane coated aluminium substrate | 1 | 1 | 1 |

| | | | |
|---|---|---|---|
| * t0; moment right after printing ** t+24h; 24 hours after printing Tape details: No.1: Tesa^{®} 4156PV1 (ou 3M 616) No.2: transparent Mat Lyreco^{®} No.3: transparent Brillant 3M^{®}: scotch Reference 550 | | | |

In the above Table:
- 1 means Best Performance
- 2 means Fair Performance
- 3 means Poor Performance

Test results were the same at t0 as at t+24h.

## Claims

1. Opaque pigmented ink composition for the inkjet printing technique, liquid at room temperature, comprising:
a) a solvent consisting of one or more aliphatic ketones with 3 to 10 carbon atoms, such as acetone, butanone (methyl-ethyl-ketone or MEK), pentanone-2 (methyl-propyl-ketone or MPK), methyl-3 butanone-2 (methyl-isopropyl-ketone or MiPK), diethyl ketone, methyl-4 pentanone-2 (methyl-isobutyl-ketone or MiBK), cyclopentanone, and cyclohexanone;
b) a binding resin having a weight average molecular weight of 16000 to 30000;
c) a tackifier selected from rosin esters having a weight average molecular weight of less than or equal to 2500, preferably from 1800 to 2200; and
d) one or more pigment(s) in a total amount from 5% to 20% by weight, preferably from 6.5% to 17% by weight, more preferably from 9% to 16% by weight, better from 10% to 15% by weight of the total weight of the ink jet ink composition;
the viscosity of the opaque pigmented ink composition being from 2.8 to 6.2 cPs, preferably from 3 to 5 cPs at 20°C, when the ink composition is for the CIJ printing technique, and from 1 to 25 cPs, preferably from 6 to 25 cPs at 20°C when the ink composition is for the SPI printing technique,
**characterized in that** it comprises a polycaprolactone diol having a weight average molecular weight from 3000 to 15000.

2. Opaque pigmented ink composition according to claim 1, wherein the solvent consists of Methyl-Ethyl-Ketone or MEK.

3. Opaque pigmented ink composition according to any one of the preceding claims, wherein the binding resin is an amorphous copolyester resin, preferably a copolyester resin prepared by polymerization of four monomers, i.e. terephthalic acid, isophthalic acid, neopentyl glycol and ethylene glycol.

4. Opaque pigmented ink composition according to any one of the preceding claims, wherein the rosin esters are prepared by esterification of rosin with monovalent and polyvalent alcohols such as glycerine and pentaerythritol; preferably, the tackifier is a pentaerythritol rosin ester.

5. Opaque pigmented ink composition according to any one of the preceding claims, wherein the solvent generally represents 20% to 99% by weight of the total weight of the ink composition, preferably the solvent represents from 30% to 95% by weight, more preferably 30% to 90% by weight, even more preferably from 50% to 75% by weight, for example of the total weight of the ink composition according to the invention.

6. Opaque pigmented ink composition according to any one of the preceding claims which comprises from 0.1% to 30% by weight, preferably from 5% to 20% by weight, more preferably from 7 to 15% by weight, better from 7,5 to 10 of the total weight of the ink composition, of the binding resin.

7. Opaque pigmented ink composition according to any one of the preceding claims which comprises from 0.1% to 30% by weight, preferably from 5% to 20% by weight, more preferably from 7 to 15% by weight, better from 7,5 to 10% of the total weight of the ink composition, of the tackifier.

8. Opaque pigmented ink composition according to any one of the preceding claims, wherein the pigments(s) are selected from black pigments, from white pigments, and from pigments having a colour other than white and other than black; preferably, the black pigment(s) are selected among C.I. (Colour Index) Pigment Blacks, such as C.I. Pigment Black 6 (carbon black) and C.I. Pigment Black 7 (carbon black), and the white pigment(s) are selected among C.I. (Colour Index) Pigment Whites, such as C.I. Pigment White 5 (Lithopone, mixture of barium sulphate and zinc sulphide), 6 (TiO₂), 12 (ZrO₂), and 21 (BaSO₄).

9. Opaque pigmented ink composition according to any one of the preceding claims which further comprises one or several additional plasticizer(s) (of the binding resin).

10. Opaque pigmented ink composition according to any one of the preceding claims which further comprises one or several additive(s), chosen from among anti-foaming agents; chemical stabilisers; UV stabilisers; surface active agents; agents inhibiting corrosion by salts, particularly by conductivity salts; bactericides, fungicides and biocides; pH regulatory buffers; and optical brighteners.

11. Opaque pigmented ink composition according to any one of the preceding claims which further comprises at least one conductivity salt, preferably with a content of 0.1 to 20% by weight, more preferably from 0.1 to 10% by weight, even more preferably from 0.1 to 5% by weight of the total weight of the ink composition; preferably, said conductivity salt is chosen from among salts of alkaline metals such as lithium, sodium, potassium salts, salts of alkaline earth metals such as magnesium and calcium salts, and single or quaternary ammonium salts; these salts being in the form of halides, perchlorates, nitrates, thiocyanates, formiates, acetates, sulphates, propionates, trifluoroacetates, triflates (trifluoromethane sulphonates), hexafluorophosphates, hexafluoroantimonates, tetrafluoroborates, picrates, carboxylates or sulphonates.

12. Method for marking a substrate, by jetting or spraying an ink composition onto this substrate, using an inkjet printing technique, whereby the substrate is provided with a marking obtained by drying and/or absorption of the ink composition, **characterised in that** the jetted or sprayed ink composition is an opaque pigmented ink composition according to any one of claims 1 to 11.

13. Method according to claim 12, wherein the substrate, is made of a metal, for example of iron or aluminium; of an alloy, such as steel, especially stainless steel; of an organic polymer, particularly of a thermoplastic polymer, for example chosen from among Polyurethanes PURs, PVDCs, PVCs, polyesters, PETs, polyolefins, such as polyethylenes (PE) or polypropylenes (PP), and blends thereof; or of a composite of several of the above materials.

14. Method according to claim 13, wherein the substrate is an extruded, moulded, blow-moulded, injection-moulded, or rotation-moulded part made of one or more organic polymer(s), in particular made of one or more thermoplastic polymer(s), preferably selected from polyurethanes (PURs), polyvinylchlorides (PVCs), and polyolefins, such as polyethylenes (PEs) or polypropylenes (PPs), and blends thereof.

15. Method according to claim 13 or 14, wherein said part is selected from laminates, coatings, liners, wires, cables, hoses, pipes, cable ducts, cable trays, and boxes, coatings and housings such as electrical boxes and cable boxes, flexible batteries and electronic circuit boards.

## Patentansprüche

1. Opake pigmentierte Tintenzusammensetzung für die Tintenstrahldrucktechnik, flüssig bei Raumtemperatur, umfassend:
a) ein Lösungsmittel, bestehend aus einem oder mehreren aliphatischen Ketonen mit 3 bis 10 Kohlenstoffatomen, wie Aceton, Butanon (Methylethylketon oder MEK), Pentanon-2 (Methylpropylketon oder MPK), Methyl-3-butanon-2 (Methylisopropylketon oder MiPK), Diethylketon, Methyl-4-pentanon-2 (Methylisobutylketon oder MiBK), Cyclopentanon und Cyclohexanon;
b) ein Bindemittelharz mit einem gewichtsmittleren Molekulargewicht von 16000 bis 30000;
c) einen Klebrigmacher, ausgewählt aus Kolophoniumestern mit einem gewichtsmittleren Molekulargewicht von weniger als oder gleich 2500, vorzugsweise von 1800 bis 2200; und
d) ein oder mehrere Pigment(e) in einer Gesamtmenge von 5 Gew.-% bis 20 Gew.-%, vorzugsweise von 6,5 Gew.-% bis 17 Gew.-%, bevorzugter von 9 Gew.-% bis 16 Gew.-%, besser von 10 Gew.-% bis 15 Gew.-% des Gesamtgewichts der Tintenstrahltintenzusammensetzung;
wobei die Viskosität der opaken pigmentierten Tintenzusammensetzung bei 20 °C von 2,8 bis 6,2 cPs, vorzugsweise von 3 bis 5 cPs beträgt, wenn die Tintenzusammensetzung für die CIJ-Drucktechnik ist, und von 1 bis 25 cPs, vorzugsweise von 6 bis 25 cPs bei 20 °C, wenn die Tintenzusammensetzung für die SPI-Drucktechnik ist,
**dadurch gekennzeichnet, dass** sie ein Polycaprolactondiol mit einem gewichtsmittleren Molekulargewicht von 3000 bis 15000 umfasst.

2. Opake pigmentierte Tintenzusammensetzung nach Anspruch 1, wobei das Lösungsmittel aus Methylethylketon oder MEK besteht.

3. Opake pigmentierte Tintenzusammensetzung nach einem der vorstehenden Ansprüche, wobei das Bindemittelharz ein amorphes Copolyesterharz ist, vorzugsweise ein Copolyesterharz, das durch Polymerisation von vier Monomeren, d. h. Terephthalsäure, Isophthalsäure, Neopentylglykol und Ethylenglykol, hergestellt wurde.

4. Opake pigmentierte Tintenzusammensetzung nach einem der vorstehenden Ansprüche, wobei die Kolophoniumester durch Veresterung von Kolophonium mit einwertigen und mehrwertigen Alkoholen wie Glycerin und Pentaerythrit hergestellt werden; wobei der Klebrigmacher vorzugsweise ein Pentaerythrit-Kolophoniumester ist.

5. Opake pigmentierte Tintenzusammensetzung nach einem der vorstehenden Ansprüche, wobei das Lösungsmittel im Allgemeinen 20 Gew.-% bis 99 Gew.-% des Gesamtgewichts der Tintenzusammensetzung darstellt, wobei das Lösungsmittel vorzugsweise von 30 Gew.-% bis 95 Gew.-%, bevorzugter 30 Gew.-% bis 90 Gew.-%, noch bevorzugter von 50 Gew.-% bis 75 Gew.-%, zum Beispiel, des Gesamtgewichts der erfindungsgemäßen Tintenzusammensetzung darstellt.

6. Opake pigmentierte Tintenzusammensetzung nach einem der vorstehenden Ansprüche, die von 0,1 Gew.-% bis 30 Gew.-%, vorzugsweise von 5 Gew.-% bis 20 Gew.-%, bevorzugter von 7 Gew.-% bis 15 Gew.-%, besser von 7,5 bis 10 des Gesamtgewichts der Tintenzusammensetzung das Bindemittel umfasst.

7. Opake pigmentierte Tintenzusammensetzung nach einem der vorstehenden Ansprüche, die von 0,1 Gew.-% bis 30 Gew.-%, vorzugsweise von 5 Gew.-% bis 20 Gew.-%, bevorzugter von 7 Gew.-% bis 15 Gew.-%, besser von 7,5 bis 10 % des Gesamtgewichts der Tintenzusammensetzung den Klebrigmacher umfasst.

8. Opake pigmentierte Tintenzusammensetzung nach einem der vorstehenden Ansprüche, wobei das/die Pigment(e) ausgewählt sind aus schwarzen Pigmenten, aus weißen Pigmenten und aus Pigmenten mit einer Farbe anders als Weiß und anders als Schwarz; wobei das/die schwarze(n) Pigment(e) vorzugsweise ausgewählt sind aus C.I. (Farbindex) Pigment Blacks, wie C.I. Pigment Black 6 (Ruß) und C.I. Pigment Black 7 (Ruß), und die weißen Pigmente ausgewählt sind aus C.I. (Farbindex) Pigment Whites, wie C.I. Pigment White 5 (Lithopon, Mischung aus Bariumsulfat und Zinksulfid), 6 (TiO₂), 12 (ZrO₂) und 21 (BaSO₄).

9. Opake pigmentierte Tintenzusammensetzung nach einem der vorstehenden Ansprüche, die weiter einen oder mehrere zusätzliche Weichmacher (des Bindemittelharzes) umfasst.

10. Opake pigmentierte Tintenzusammensetzung nach einem der vorstehenden Ansprüche, die weiter einen oder mehrere Zusatzstoff(e) umfasst, gewählt aus Entschäumern; chemischen Stabilisatoren; UV-Stabilisatoren; oberflächenaktiven Mitteln; Mitteln, die Korrosion durch Salze hemmen, insbesondere durch Leitfähigkeitssalze; Bakteriziden, Fungiziden und Bioziden; pHregulatorischen Puffern; und optischen Aufhellern.

11. Opake pigmentierte Tintenzusammensetzung nach einem der vorstehenden Ansprüche, die weiter mindestens ein Leitfähigkeitssalz umfasst, vorzugsweise mit einem Gehalt von 0,1 bis 20 Gew.-%, bevorzugter von 0,1 bis 10 Gew.-%, noch bevorzugter von 0,1 bis 10 Gew.-% des Gesamtgewichts der Tintenzusammensetzung; wobei das Leitfähigkeitssalz vorzugsweise gewählt ist aus Salzen von Alkalimetallen wie Lithium-, Natrium-, Kaliumsalzen, Salzen von Erdalkalimetallen wie Magnesium- und Calciumsalzen und einfachen oder quartären Ammoniumsalzen; wobei diese Salze in Form von Halogeniden, Perchloraten, Nitraten, Thiocyanaten, Formiaten, Acetaten, Sulfaten, Propionaten, Trifluoracetaten, Triflaten (Trifluormethansulfonaten), Hexafluorphosphaten, Hexafluorantimonaten, Tetrafluorboraten, Pikraten, Carboxylaten oder Sulfonaten vorliegen.

12. Verfahren zum Markieren eines Substrats durch Aufsprühen oder Aufspritzen einer Tintenzusammensetzung auf dieses Substrat unter Verwendung einer Tintenstrahldrucktechnik, wobei das Substrat mit einer Markierung bereitgestellt wird, die durch Trocknen und/oder Absorption der Tintenzusammensetzung erhalten wird, **dadurch gekennzeichnet, dass** die aufgesprühte oder aufgespritzte Tintenzusammensetzung eine opake pigmentierte Tintenzusammensetzung nach einem der Ansprüche 1 bis 11 ist.

13. Verfahren nach Anspruch 12, wobei das Substrat aus einem Metall, beispielsweise aus Eisen oder Aluminium; aus einer Legierung, wie Stahl, speziell Edelstahl; aus einem organischen Polymer, besonders aus einem thermoplastischen Polymer, beispielsweise gewählt aus Polyurethanen PURs, PVDCs, PVCs, Polyestern, PETs, Polyolefinen, wie Polyethylenen (PE) oder Polypropylenen (PP), und Gemischen davon; oder aus einem Verbundwerkstoff aus mehreren der obenstehenden Materialien gefertigt ist.

14. Verfahren nach Anspruch 13, wobei das Substrat ein extrudiertes, geformtes, blasgeformtes, spritzgegossenes oder rotationsgeformtes Teil ist, das aus einem oder mehreren organischen Polymer(en) gefertigt ist, insbesondere aus einem oder mehreren thermoplastischen Polymeren gefertigt ist, vorzugsweise ausgewählt aus Polyurethanen (PURs), Polyvinylchloriden (PVCs) und Polyolefinen wie Polyethylenen (PEs) oder Polypropylenen (PPs) und Gemischen davon.

15. Verfahren nach Anspruch 13 oder 14, wobei das Teil ausgewählt ist aus Laminaten, Beschichtungen, Auskleidungen, Drähten, Kabeln, Schläuchen, Rohren, Kabelkanälen, Kabelrinnen und Kästen, Beschichtungen und Gehäusen wie Elektrokästen und Kabelkästen, flexiblen Batterien und elektronischen Leiterplatten.

## Revendications

1. Composition d'encre pigmentée opaque pour l'impression jet d'encre, liquide à température ambiante, comprenant :
a) un solvant constitué d'une ou plusieurs cétones aliphatiques avec 3 à 10 atomes de carbone, comme acétone, butanone (méthyl-éthyl-cétone ou MEK), pentanone-2 (méthyl-propyl-cétone ou MPK), méthyl-3 butanone-2 (méthyl-isopropyl-cétone ou MiPK), diéthyl cétone, méthyl-4 pentanone-2 (méthyl-isobutyl-cétone ou MiBK), cyclopentanone et cyclohexanone ;
b) une résine liante présentant un poids moléculaire moyen de 16000 à 30000 ;
c) un agent collant sélectionné parmi les esters de colophane présentant une masse moléculaire moyenne en poids inférieure ou égale à 2500, de préférence comprise entre 1800 et 2200 ; et
d) un ou plusieurs pigments dans une quantité totale de 5 % à 20 % en poids, de préférence de 6,5 % à 17 % en poids, plus préférentiellement de 9 % à 16 % en poids, de préférence de 10 % à 15 % en poids du poids total de la composition d'encre pour imprimante à jet d'encre ;
la viscosité de la composition d'encre pigmentée opaque étant de 2,8 à 6,2 cP, de préférence de 3 à 5 cP à 20 °C, lorsque la composition d'encre est destinée à la technique d'impression CIJ, et de 1 à 25 cP, de préférence de 6 à 25 cP à 20 °C lorsque la composition d'encre est destinée à la technique d'impression SPI,
**caractérisée en ce qu'**elle comprend un diol de polycaprolactone présentant un poids moléculaire moyen de 3000 à 15000.

2. Composition d'encre pigmentée opaque selon la revendication 1, dans laquelle le solvant est constitué de méthyléthylcétone ou MEK.

3. Composition d'encre pigmentée opaque selon l'une quelconque des revendications précédentes, dans laquelle la résine liante est une résine copolyester amorphe, de préférence résine copolyester préparée par polymérisation de quatre monomères, à savoir acide téréphtalique, acide isophtalique, néopentylglycol et éthylène glycol.

4. Composition d'encre pigmentée opaque selon l'une quelconque des revendications précédentes, dans laquelle les esters de colophane sont préparés par estérification de la colophane avec des alcools monovalents et polyvalents tels que glycérine et pentaérythritol ; de préférence, l'agent collant est un ester de colophane de pentaérythritol.

5. Composition d'encre pigmentée opaque selon l'une quelconque des revendications précédentes, dans laquelle le solvant représente généralement de 20 % à 99 % en poids du poids total de la composition d'encre, de préférence de 30 % à 95 % en poids, plus préférentiellement de 30 % à 90 % en poids, et encore plus préférentiellement de 50 % à 75 % en poids, par exemple du poids total de la composition d'encre selon l'invention.

6. Composition d'encre pigmentée opaque selon l'une quelconque des revendications précédentes, comprenant de 0,1 % à 30 % en poids, de préférence à partir de 5 % à 20 % en poids, de préférence de 7 à 15 % en poids, mieux de 7,5 à 10 % du poids total de la composition d'encre, de la résine liante.

7. Composition d'encre pigmentée opaque selon l'une quelconque des revendications précédentes, comprenant de 0,1 % à 30 % en poids, de préférence à partir de 5 % à 20 % en poids, de préférence de 7 à 15 % en poids, mieux de 7,5 à 10 % du poids total de la composition d'encre, de l'agent collant.

8. Composition d'encre pigmentée opaque selon l'une quelconque des revendications précédentes, dans laquelle les pigments sont sélectionnés parmi les pigments noirs, les pigments blancs et les pigments présentant une couleur autre que blanche et autre que noire ; de préférence, le ou les pigments noirs sont sélectionnés parmi les pigments noirs CI (indice de couleur), tels que le pigment noir CI 6 (noir de carbone) et le pigment noir CI 7 (noir de carbone), et le(s) pigment(s) blanc(s) sont sélectionnés parmi les pigments blancs CI (indice de couleur), tels que le pigment blanc CI 5 (lithopone, mélange de sulfate de baryum et de sulfure de zinc), 6 (TiO₂), 12 (ZrO₂) et 21 (BaSO₄).

9. Composition d'encre pigmentée opaque selon l'une quelconque des revendications précédentes, comprenant en outre un ou plusieurs plastifiants supplémentaires (de la résine liante).

10. Composition d'encre pigmentée opaque selon l'une quelconque des revendications précédentes, comprenant en outre un ou plusieurs additifs, sélectionnés parmi les agents antimousse ; stabilisateurs chimiques ; stabilisateurs UV ; agents tensioactifs ; agents inhibant la corrosion par les sels, en particulier par les sels conducteurs ; bactéricides, fongicides et biocides ; tampons régulateurs de pH ; et azurants optiques.

11. Composition d'encre pigmentée opaque selon l'une quelconque des revendications précédentes, comprenant en outre au moins un sel conducteur, de préférence à une teneur de 0,1 à 20 % en poids, plus préférentiellement de 0,1 à 10 % en poids, et encore plus préférentiellement de 0,1 à 5 % en poids du poids total de la composition d'encre ; de préférence, ledit sel conducteur est sélectionné parmi les sels de métaux alcalins tels que les sels de lithium, de sodium et de potassium, sels de métaux alcalino-terreux tels que les sels de magnésium et de calcium, et sels d'ammonium simples ou quaternaires ; ces sels se présentant sous forme d'halogénures, perchlorates, nitrates, thiocyanates, formiates, acétates, sulfates, propionates, trifluoroacétates, triflates (sulfonates de trifluorométhane), hexafluorophosphates, hexafluoroantimonates, tétrafluoroborates, picrates, carboxylates ou sulfonates.

12. Procédé de marquage d'un substrat par projection ou pulvérisation d'une composition d'encre sur ce substrat, à l'aide d'une technique d'impression à jet d'encre, le substrat étant ainsi marqué par séchage et/ou absorption de la composition d'encre, **caractérisée en ce que** la composition d'encre projetée ou pulvérisée est une composition d'encre pigmentée opaque selon l'une quelconque des revendications 1 à 11.

13. Procédé selon la revendication 12, dans lequel le substrat est constitué d'un métal, par exemple de fer ou d'aluminium ; d'un alliage, tel que l'acier, en particulier l'acier inoxydable ; d'un polymère organique, en particulier d'un polymère thermoplastique, par exemple sélectionné parmi les polyuréthanes (PUR), PVC, polyesters, PET, polyoléfines, telles que polyéthylènes (PE) ou polypropylènes (PP), et leurs mélanges ; ou d'un composite de plusieurs des matériaux susmentionnés.

14. Procédé selon la revendication 13, dans lequel le substrat est une pièce extrudée, moulée, soufflée, moulée par injection ou moulée par rotation, constituée d'un ou plusieurs polymères organiques, en particulier constitué d'un ou plusieurs polymères thermoplastiques, de préférence sélectionnés parmi les polyuréthanes (PUR), polychlorures de vinyle (PVC) et polyoléfines, tels que polyéthylènes (PE) ou polypropylènes (PP), et leurs mélanges.

15. Procédé selon la revendication 13 ou 14, dans lequel ladite pièce est sélectionnée parmi les stratifiés, revêtements, doublures, fils, câbles, tuyaux, conduits de câbles, chemins de câbles et boîtes, revêtements et boîtiers tels que boîtes électriques et boîtes de câbles, batteries flexibles et cartes de circuits électroniques.
